# EUROPÄISCHE PATENTANMELDUNG

(11) **EP 1 630 062 A2**
(43) Veröffentlichungstag der Anmeldung: **01.03.2006**
(21) Anmeldenummer: 05009988.6
(22) Anmeldetag: 07.05.2005
(51) Int. Cl.: B62B 3/14, B60B 33/00

(54) **Stapelbarer Einkaufswagen**

(30) Priorität: 26.08.2004 DE 102004041323
(71) Anmelder: Brüder Siegel GmbH + Co. KG, 89343 Jettingen-Scheppach (DE)
(72) Erfinder: Schlichtmeier, Jens, 89362 Offingen (DE)
(74) Vertreter: Möhring, Friedrich

(57) **Zusammenfassung**

Ein stapelbarer Einkaufswagen umfaßt ein Fahrgestell (1), einen darauf montierten, sich in Fahrtrichtung (F) konisch verjüngenden korbartigen Warenbehälter (2) und eine rückwärtig angeordnete Schiebeeinrichtung (3). Das Fahrgestell weist dabei einen Rahmen (4) und vier Lenkrollen (5) auf. Bei einem Durchmesser der Räder (34) der Lenkrollen (5) von mindestens 120mm beträgt der Nachlauf der Lenkrollen maximal 36mm.

## Beschreibung

Die vorliegende Erfindung betrifft einen stapelbaren Einkaufswagen, umfassend ein Fahrgestell, einen darauf montierten, sich in Fahrtrichtung konisch verjüngenden korbartigen Warenbehälter und eine rückwärtig angeordnete Schiebeeinrichtung, wobei das Fahrgestell einen Rahmen und vier Lenkrollen aufweist.

Derartige Einkaufswagen sind allgemein bekannt. Sie werden Kunden in Selbstbedienungsgeschäften, insbesondere in Lebensmittel-Selbstbedienungsgeschäften zur Verfügung gestellt, um die durch den jeweiligen Kunden den Regalen entnommenen Waren zur Kasse befördern und ggfs. anschließend zu einem auf einem Parkplatz abgestellten Fahrzeug transportieren zu können.

Die DE 8408911 U1 offenbart einen Einkaufswagen der gattungsgemäßen Art, welcher die Besonderheit aufweist, daß die Schwenkachsen der vorderen Lenkrollen gegenüber der Vertikalen um einen geringen Winkel nach vorne geneigt sind. Hierdurch soll der Geradeauslauf des Einkaufswagens verbessert werden.

Gattungsgemäße Einkaufswagen unterliegen in der Praxis einer Vielzahl unterschiedlichster Anforderungen. Hierzu zählen insbesondere eine gute, komfortable und leichte Handhabbarkeit der einzelnen Einkaufswagen durch die Kunden, eine möglichst geringe Lärmentwicklung auch beim Fahren auf unebenem Untergrund (z.B. auf einem Parkplatz), ein hohes Maß an Stabilität bei einem möglichst geringen Gewicht, eine hohe Standsicherheit, eine möglichst geringen Neigung zur Verschmutzung, eine möglichst geringe Gefährdung der Ladeneinrichtung und/oder in der angebotenen Waren, durch einen anstoßenden Einkaufswagen beschädigt zu werden, eine möglichst geringes Unfall- und Verletzungsrisiko, eine große Ladekapazität und ein möglichst geringer Stapelabstand. Hinzu kommen Gesichtspunkte der Handhabbarkeit eines eine Vielzahl von Einkaufswagen umfassenden Stapels, beispielsweise um die Einkaufswagen von einem Parkplatz zu einer Bereitstellungszone in dem betreffenden Selbstbedienungsgeschäft zurückzuführen. Zwischen einzelnen der Anforderungen besteht dabei ein Konflikt, beispielsweise einem großen Fassungsvermögen und einem geringen Stapelabstand. Auch leidet die Handhabbarkeit eines Einkaufswagens häufig unter dessen Fassungsvermögen, weil auf dem Boden eines großen Warenbehälters liegende, flache Waren mitunter gerade von Kunden mit unterdurchschnittlicher Körpergröße nicht leicht dem Einkaufswagen entnommen werden können. Auch zwischen dem Schutz des Ladeninventars einerseits und der Handhabbarkeit des Einkaufswagens durch den Kunden läßt sich insoweit einen Konflikt ausmachen, als ein frontseitiger und seitlicher Überstand der Rollen über den Warenbehälter zwar unterbindet, daß der Warenbehälter Ladeninventar rammen kann; allerdings ergibt sich in diesem Falle auch an Kassentischen und/oder Packtischen ein Spalt zu dem Warenbehälter des Einkaufswagens, durch den kleinformatige Waren hindurchfallen können.

Die vorliegende Erfindung hat sich zur Aufgabe gemacht, einen Einkaufswagen der gattungsgemäßen Art bereitzustellen, der im Sinne einer praxisgerechten Optimierung den typischen Anforderungen eines zeitgemäß ausgestatteten Lebensmittelgeschäfts in möglichst weitgehender Weise gerecht werden kann.

Gelöst wird diese Aufgabenstellung gemäß der vorliegenden Erfindung, indem bei einem Durchmesser der Räder der Lenkrollen von mindestens 120mm, bevorzugt 125mm, der Nachlauf der Lenkrollen maximal 36mm, bevorzugt 35mm oder weniger, beträgt. Diese Gestaltung wirkt sich in überraschender Weise günstig auf eine Vielzahl der vorstehend spezifiziert dargelegten Einzelanforderungen aus. Insbesondere leidet in Anwendung der vorliegenden Erfindung der Stapelabstand nicht unter der Verwendung von besonders großformatigen, komfortablen und in einer besonderen Laufruhe des Einkaufswagens resultierenden Rädern. Im Gegenteil, die erfindungsgemäße Kombination eines vergleichsweise großen Raddurchmessers mit einem vergleichsweise geringen Nachlauf gestattet einen besonders geringen, attraktiven Stapelabstand, z.B. nur 220mm bei einem Fassungsvermögen (gemäß DIN) des Warenbehälters von 2101. Zugleich lassen sich die Lenkrollen bei Einhaltung der erfindungsgemäßen Lehre so plazieren, daß die Standsicherheit des Einkaufswagens, die Handhabbarkeit sowohl des einzelnen Einkaufswagens als auch eines Einkaufswagenstapels und der Schutz der Ladeneinrichtung vor Beschädigung optimal sind. Was die Handhabung eines Einkaufswagenstapels angeht, so kommt als Vorteil insbesondere zum Tragen, daß selbst die entsprechend der vorliegenden Erfindung besonders groß dimensionierten Lenkrollen sich in einem Einkaufswagenstapel mit besonders eng gestapelten Einkaufswagen ungehindert um ihre Schwenkachse verschwenken lassen.

Eine erste besonders bevorzugte Weiterbildung der vorliegenden Erfindung zeichnet sich dadurch aus, daß der Längsabstand zwischen den Schwenkachsen der vorderen und der hinteren Lenkrollen zwischen dem 4,5-fachen und dem 4,7-fachen Wert, besonders bevorzugt zwischen dem 4,57-fachen und dem 4,63-fachen Wert des Stapelabstands beträgt. In diesem Falle stehen die vorderen Rollen der Einkaufswagen eines Stapels, namentlich wenn der tatsächliche Abstand jeweils zweier benachbarter Einkaufswagen des betreffenden Stapels infolge der spezifischen Ausführung der die betreffenden Einkaufswagen aneinander koppelnden Pfandschloßeinrichtung etwas größer ist als der (minimale) Stapelabstand, jeweils auf Lücke zwischen den hinteren Rollen zweier einander benachbarter Einkaufswagen. Dies ermöglicht es, die vorderen Rollen, ohne daß diese mit den hinteren Rollen anderer Einkaufswagen des Stapels kollidieren, besonders weit nach außen zu setzen, was sich sowohl im Hinblick auf die Standsicherheit des Einkaufswagens als auch im Hinblick auf einem möglichst weitgehenden Schutz der Ladeneinrichtung vor Beschädigung durch die Warenbehälter von Einkaufswagen als besonders günstig erweist.

Gemäß einer anderen bevorzugten Weiterbildung weisen zumindest die vorderen Lenkrollen Schutzglocken auf, die über die Kontur des Warenbehälters in den vorderen Eckbereichen überstehen. Dies ermöglicht es, die vorderen Lenkrollen gezielt dazu einzusetzen, eine Kollision des Warenbehälters des betreffenden Einkaufswagens mit Ladeninventar und/oder angebotenen Waren zu verhindern, ohne daß die Gefahr einer Beschädigung des Ladeninventars im Sockelbereich und/oder der Lenkrollen im Berich der Rollengabel in nicht vertretbarer Weise zunähme.

Gemäß einer wiederum anderen bevorzugten Weiterbildung der Erfindung ist vorgesehen, daß der Warenbehälter an seinen beiden Seitenwänden unterhalb des jeweiligen oberen Randes mit Abstand hierzu jeweils mindestens einen sich horizontal erstreckenden Querdraht aufweist. Dieser sich horizontal, d.h. über die gesamte Länge des Warenbehälters auf derselben Höhe erstreckende Querdraht kann bei einer auf dessen Lage abgestimmten Anordnung von Stoßschutzleisten am Ladeninventar (z.B. an Kassentischen und Packtischen) in besonderer Weise zur Minimierung der Gefahr einer Beschädigung von Einkaufswagen und/oder Ladeninventar im Falle einer Kollision beitragen.

Im Hinblick auf eine besonders leichte Handhabbarkeit des erfindungsgemäßen Einkaufswagens insbesondere beim Be- und Entladen erweist sich namentlich im Falle eines vergleichsweise großen Fassungsvermögens des Warenbehälters (z.B. 2101 gemäß DIN) als günstig, wenn der obere Rand der Seitenwände des Warenbehälters um maximal 4°, besonders bevorzugt um etwa 2° gegenüber der Waagerechten nach vorne und/oder wenn der Boden des Warenbehälters um lediglich 3° bis 7°, besonders bevorzugt etwa 5° gegenüber der Waagerechten nach hinten geneigt ist. Ebenfalls unter Gesichtspunkten einer besonders leichten Handhabbarkeit des erfindungsgemäßen Einkaufswagens ist es besonders günstig, wenn der Warenbehälter in seiner Stirnwand eine nach oben durch den oberen Randdraht begrenzte Grifföffnung aufweist.

Eine wiederum andere bevorzugte Weiterbildung der Erfindung zeichnet sich dadurch aus, daß der Rahmen des Fahrgestells zwei Seitenholme mit jeweils einem nach vorne geneigten vorderen Abschnitt und einem nach hinten geneigten hinteren Abschnitt aufweist, wobei endseitig an den vorderen Abschnitten der Seitenholme die vorderen Lenkrollen und endseitig an den hinteren Abschnitten der Seitenholme die hinteren Lenkrollen angeordnet sind. Die Seitenholme können dabei jeweils insbesondere aus einem Ovalrohr ausgeführt sein. Besonders bevorzugt sind die beiden Seitenholme im Bereich ihrer vorderen Abschnitte dergestalt gebogen oder abgewinkelt, daß sie im hinteren Bereich der vorderen Abschnitte konvergieren, während sie im vorderen Bereich der vorderen Abschnitte im wesentlichen parallel zueinander verlaufen. Dies ist wiederum besonders günstig, was die Minimierung des Stapelabstands bei besonders standfest ausgeführten Einkaufswagen mit sowohl besonders großformatigen Rollen als auch einem besonders hohen Fassungsvermögen des Warenbehälters betrifft.

Besonders bevorzugt sind die beiden Seitenholme dabei oben über einen Rechteckrahmen miteinander verbunden, der zugleich Teil der Tragstruktur für den Warenbehälter ist. Hierzu können insbesondere an Seitendrähten des Rechteckrahmens Konsolbleche angeschweißt sein, an denen der Warenbehälter eingehängt ist. Besonders bevorzugt steht dabei der Rechteckrahmen so weit seitlich über die Seitenholme über, daß zwischen den Seitendrähten des Rechteckrahmens und den Seitenholmen jeweils ein Spalt besteht. Dies ist unter Gesichtspunkten der Hygiene besonders günstig, weil es die Ansammlung von Schmutz vermeidet. Unter dem gleichen Blickwinkel ist es auch von Vorteil, wenn der Rechteckrahmen über einzelne, kurze Drahtwinkel mit den Seitenholmen verbunden ist; hierdurch wird die Ansammlung von "Schmutznestern" vermieden, wie sie häufig bei Rohren bzw. Drähten entstehen, die über eine größere Länge aneinander anliegend miteinander verbunden sind.

Gemäß einer wiederum anderen bevorzugten Weiterbildung der Erfindung ist an der Rückwand des Warenbehälters eine Kindersitzeinrichtung mit einer gelenkig mit der Rückwand verbundenen Rückenlehne und einer ebenfalls gelenkig mit der Rückwand verbundenen Sitzfläche angeordnet, wobei die Rückenlehne dergestalt abgewinkelt ist, daß sie - bei deaktiviertem Kindersitz - in ihrem oberen Bereich einen Abstand zu der Rückwand einhält. Dies ist besonders vorteilhaft im Hinblick auf die Geräuschentwicklung, weil es ein Anschlagen der Rückenlehne des Kindersitzes an die Rückwand des Warenbehälters wirksam unterbindet. Auch die Gefahr, daß ein Kunde sich insbesondere beim Stapeln zweier Einkaufswagen zwischen der Rückenlehne der Kindersitzeinrichtung und der Rückwand des Warenbehältnisses seine Finger einklemmt, wird auf diese Weise maßgeblich reduziert.

Besonders bevorzugt ist dabei an der Rückenlehne ein außermittig angeordneter Betätigungsbügel angeordnet. Dabei kann insbesondere im Bereich der Schiebeeinrichtung in Längsrichtung hinter dem Betätigungsbügel eine Pfandschloßeinrichtung angeordnet sein, deren Unterkante tiefer liegt als die Oberkante des Betätigungsbügels. So sorgt beim Stapeln zweier Einkaufswagen die Pfandschloßeinrichtung des vorderen Einkaufswagens, an welche der Bestätigungsbügel der aktivierten Kindersitzeinrichtung des hinteren Einkaufswagens anstößt, dafür, daß beim weiteren Einschieben des hinteren Einkaufswagens in den vorderen die Kindersitzeinrichtung des hinteren Einkaufswagens deaktiviert wird, indem die Rückenlehne an die Rückwand des Warenbehälters herangeschwenkt wird. Die außermittige Anordnung des Betätigungsbügels ist geeignet, zu einer Verringerung der Gefahr einer Verletzung beim Stapeln zweier Einkaufswagen von der Seite her beizutragen.

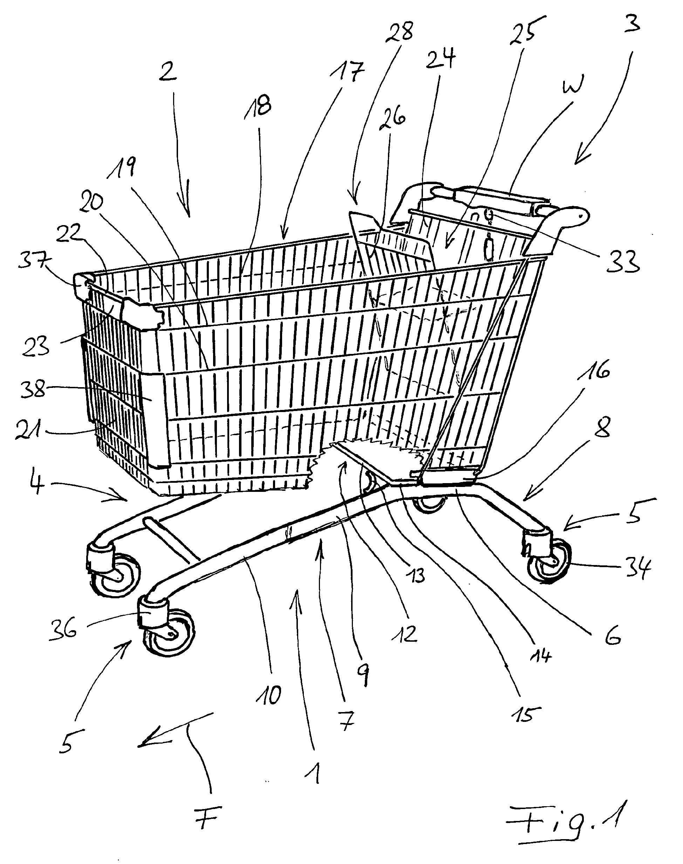

Im folgenden wird die vorliegende Erfindung anhand eines in der Zeichnung veranschaulichten bevorzugten Ausführungsbeispiels näher erläutert. Dabei zeigt
- Fig. 1: schräg von vorne links einen erfindungsgemäß ausgeführten Einkaufswagen,

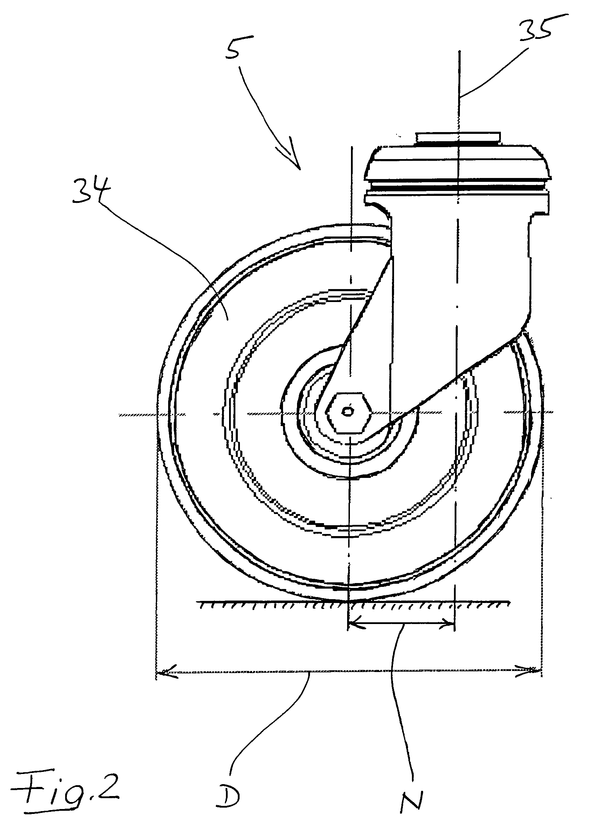

- Fig. 2: in Seitenansicht eine der vier Lenkrollen des Einkaufswagens nach Fig. 1 (ohne Schutzglocke) und

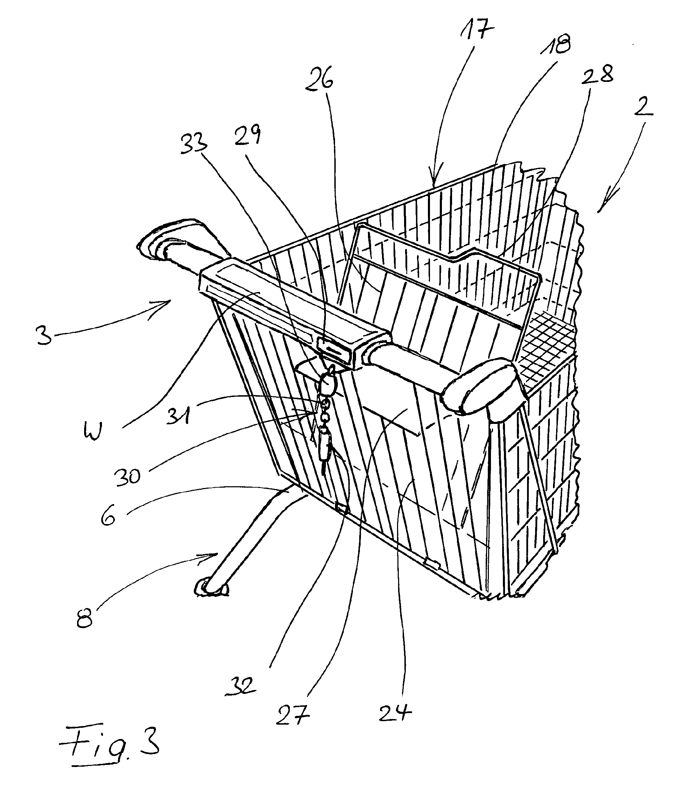

- Fig. 3: die Schiebegriffzone des Einkaufswagens nach Fig. 1 schräg von hinten rechts.

Der in der Zeichnung wiedergegebene stapelbare Einkaufswagen umfaßt ein Fahrgestell 1, einen darauf montierten, sich in Fahrtrichtung F konisch verjüngenden korbartigen Warenbehälter 2 und eine rückwärtig angeordnete Schiebeeinrichtung 3. Dabei weist das Fahrgestell 1 einen Rahmen 4 und vier Lenkrollen 5 auf. Der Rahmen 4 des Fahrgestells 1 weist zwei Seitenholme 6 mit jeweils einem nach vorne geneigten vorderen Abschnitt 7 und einem nach hinten geneigten hinteren Abschnitt 8 auf. Die Seitenholme sind im Bereich ihrer vorderen Abschnitte 7 dergestalt abgewinkelt, daß sie im hinteren Bereich 9 der vorderen Abschnitte in Fahrtrichtung F konvergieren, während sie im vorderen Bereich 10 der vorderen Abschnitte im wesentlichen parallel zueinander verlaufen.

Die beiden Seitenholme 6 sind im vorderen Bereich 10 der vorderen Abschnitte 7 über eine Querstrebe 11 und oben über einen Rechteckrahmen 12 miteinander verbunden. Der Rechteckrahmen umfaßt zwei Querdrähte 13 und zwei Seitendrähte 14. Er ist über einzelne Drahtwinkel 15 mit den Seitenholmen verbunden und steht seitlich über die Seitenholme 6 über.

An den Seitendrähten 14 des Rechteckrahmens 12 sind Konsolbleche 16 angeschweißt, an denen der Warenbehälter 2 eingehängt ist.

Der obere Rand 17 der Seitenwände 18 des ein Fassungsvermögen von 2101 (nach DIN) aufweisenden Warenbehälters 2 weist eine - in Fahrtrichtung F abfallende - Neigung von 2° gegenüber der Waagerechten auf. Der Boden des Warenbehälters ist entgegen der Fahrtrichtung um 5° gegenüber der Waagerechten geneigt.
Der Warenbehälter 2 weist an seinen beiden Seitenwänden 18 unterhalb des jeweiligen oberen Randes 17 mit Abstand hierzu zwei sich horizontal erstreckende Querdrähte 19 und 20 auf. An der Stirnwand 21 des Warenbehälters 2 ist eine nach oben durch den durchgehenden oberen Randdraht 22 begrenzte Grifföffnung 23 vorgesehen.

An der Rückwand 24 des Warenbehälters 2 ist eine Kindersitzeinrichtung 25 mit einer gelenkig mit der Rückwand 24 verbundenen Rückenlehne 26 und einer ebenfalls gelenkig mit der Rückwand verbundenen Sitzfläche 27 angeordnet. Die Rückenlehne 26 ist auf der Höhe der Sitzfläche 27 dergestalt in das Innere des Warenbehälters 2 hinein abgewinkelt, daß sie auch bei deaktivierter Kindersitzeinrichtung in ihrem oberen Bereich einen Abstand zu der Rückwand 24 einhält.

Die Rückenlehne 26 umfaßt einen außermittig, nach rechts versetzt angeordneten Betätigungsbügel 28. In Längsrichtung hinter diesem ist im Bereich der Schiebeeinrichtung 3 eine - optisch in eine Werbekonsole W integrierte - Pfandschloßeinrichtung mit einer Münzschloßmechanik 29 und einem Koppelelement 30 in Form einer endseitig an der Werbekonsole W fixierten Kette 31 mit einem am anderen Ende mit dieser verbundenen Schlüssel 32 angeordnet. Die Unterkante der Pfandschloßeinrichtung liegt in dem Sinne tiefer als die Oberkante des Betätigungsbügels 28 (der aktivierten Kindersitzeinrichtung), als eine auf der Kette 31 angebrachte Kunststoff-Olive 33 dann, wenn die Kette 31 von der Werbekonsole W herabhängt, sich auf derselben Höhe befindet wie der Betätigungsbügel 28 der aktivierten Kindersitzeinrichtung.

Der Durchmesser D der Räder 34 der Lenkrollen 5 beträgt 125mm. Der Nachlauf N beträgt 35mm. Der Längsabstand zwischen den Schwenkachsen 35 der vorderen und der hinteren Lenkrollen 5 beträgt 1013mm, was dem 4,6-fachen Wert des 220mm betragenden Stapelabstands entspricht.

Die Lenkrollen 5 weisen Schutzglocken 36 auf, wobei die Schutzglocken 36 der vorderen Lenkrollen 5 über die Kontur des Warenbehälters 2 in den vorderen Eckbereichen überstehen.

An den vorderen oberen Ecken sowie den vorderen Kanten ist der Warenbehälter 2 mit Korbschutzecken 37 bzw. Kantenschutzelementen 38 ausgestattet.

## Patentansprüche

1. Stapelbarer Einkaufswagen, umfassend ein Fahrgestell (1), einen darauf montierten, sich in Fahrtrichtung (F) konisch verjüngenden korbartigen Warenbehälter (2) und eine rückwärtig angeordnete Schiebeeinrichtung (3), wobei das Fahrgestell einen Rahmen (4) und vier Lenkrollen (5) aufweist,
**dadurch gekennzeichnet,**
**daß** bei einem Durchmesser (D) der Räder (34) der Lenkrollen (5) von mindestens 120mm der Nachlauf (N) der Lenkrollen maximal 36mm beträgt.

2. Einkaufswagen nach Anspruch 1,
**dadurch gekennzeichnet,**
**daß** der Durchmesser (D) der Räder (34) der Lenkrollen (5) 125mm beträgt.

3. Einkaufswagen nach Anspruch 1 oder Anspruch 2,
**dadurch gekennzeichnet,**
**daß** der Nachlauf (N) der Lenkrollen (5) 35mm beträgt.

4. Einkaufswagen nach einem der Ansprüche 1 bis 3,
**dadurch gekennzeichnet,**
**daß** der Längsabstand zwischen den Schwenkachsen (35) der vorderen und der hinteren Lenkrollen (5) zwischen dem 4,5-fachen und dem 4,7-fachen Wert des Stapelabstands beträgt.

5. Einkaufswagen nach Anspruch 4,
**dadurch gekennzeichnet,**
**daß** der Längsabstand zwischen den Schwenkachsen (35) der vorderen und der hinteren Lenkrollen (5) zwischen dem 4,57-fachen und dem 4,63-fachen Wert des Stapelabstands beträgt.

6. Einkaufswagen nach einem der Ansprüche 1 bis 5,
**dadurch gekennzeichnet,**
**daß** der Stapelabstand bei einem Fassungsvermögen des Warenbehälters (2) von 2101 maximal 225mm beträgt.

7. Einkaufswagen nach Anspruch 6,
**dadurch gekennzeichnet,**
**daß** der Stapelabstand 220mm beträgt.

8. Einkaufswagen nach einem der Ansprüche 1 bis 7,
**dadurch gekennzeichnet,**
**daß** zumindest die vorderen Lenkrollen (5) Schutzglocken (36) aufweisen, die über die Kontur des Warenbehälters (2) in den vorderen Eckbereichen überstehen.

9. Einkaufswagen nach einem der Ansprüche 1 bis 8,
**dadurch gekennzeichnet,**
**daß** der Warenbehälter (2) an seinen beiden Seitenwänden (18) unterhalb des jeweiligen oberen Randes (17) mit Abstand hierzu jeweils mindestens einen sich horizontal erstreckenden Querdraht (19, 20) aufweist.

10. Einkaufswagen nach einem der Ansprüche 1 bis 9,
**dadurch gekennzeichnet,**
**daß** der obere Rand (17) der Seitenwände (18) des Warenbehälters (2) eine Neigung von weniger als 4° gegenüber der Waagerechten aufweist.

11. Einkaufswagen nach Anspruch 10,
**dadurch gekennzeichnet,**
**daß** der obere Rand (17) der Seitenwände (18) des Warenbehälters (2) eine Neigung von etwa 2° gegenüber der Waagerechten aufweist.

12. Einkaufswagen nach einem der Ansprüche 1 bis 11,
**dadurch gekennzeichnet,**
**daß** der Boden des Warenbehälters (2) eine Neigung zwischen 3° und 7° gegenüber der Waagerechten aufweist.

13. Einkaufswagen nach Anspruch 12,
**dadurch gekennzeichnet,**
**daß** der Boden des Warenbehälters (2) eine Neigung von etwa 5° gegenüber der Waagerechten aufweist.

14. Einkaufswagen nach einem der Ansprüche 1 bis 13,
**dadurch gekennzeichnet,**
**daß** der Rahmen (4) des Fahrgestells zwei Seitenholme (6) mit jeweils einem nach vorne geneigten vorderen Abschnitt (7) und einem nach hinten geneigten hinteren Abschnitt (8) aufweist.

15. Einkaufswagen nach Anspruch 14,
**dadurch gekennzeichnet,**
**daß** die beiden Seitenholme (6) über einen Rechteckrahmen (12) miteinander verbunden sind.

16. Einkaufswagen nach Anspruch 15,
**dadurch gekennzeichnet,**
**daß** der Rechteckrahmen (12) seitlich über die Seitenholme (6) übersteht.

17. Einkaufswagen nach Anspruch 15 oder Anspruch 16,
**dadurch gekennzeichnet,**
**daß** an Seitendrähten (14) des Rechteckrahmens (12) Konsolbleche (16) angeschweißt sind, an denen der Warenbehälter (2) eingehängt ist.

18. Einkaufswagen nach einem der Ansprüche 15 bis 17,
**dadurch gekennzeichnet,**
**daß** der Rechteckrahmen (12) über einzelne Drahtwinkel (15) mit den Seitenholmen (6) verbunden ist.

19. Einkaufswagen nach einem der Ansprüche 14 bis 18,
**dadurch gekennzeichnet,**
**daß** die Seitenholme (6) im Bereich ihrer vorderen Abschnitte (7) dergestalt gebogen oder abgewinkelt sind, daß sie im hinteren Bereich (9) der vorderen Abschnitte konvergieren, während sie im vorderen Bereich (10) der vorderen Abschnitte im wesentlichen parallel zueinander verlaufen.

20. Einkaufswagen nach einem der Ansprüche 1 bis 19,
**dadurch gekennzeichnet,**
**daß** an der Rückwand (24) des Warenbehälters (2) eine Kindersitzeinrichtung (25) mit einer gelenkig mit der Rückwand verbundenen Rückenlehne (26) und einer ebenfalls gelenkig mit der Rückwand verbundenen Sitzfläche (27) angeordnet ist, wobei die Rückenlehne dergestalt abgewinkelt ist, daß sie bei deaktivierten Kindersitzeinrichtung in ihrem oberen Bereich einen Abstand zu der Rückwand einhält.

21. Einkaufswagen nach Anspruch 20,
**dadurch gekennzeichnet,**
**daß** an der Rückenlehne (26) ein außermittig angeordneter Betätigungsbügel (28) angeordnet ist.

22. Einkaufswagen nach Anspruch 21,
**dadurch gekennzeichnet,**
**daß** im Bereich der Schiebeeinrichtung (3) in Längsrichtung hinter dem Betätigungsbügel (28) eine Pfandschloßeinrichtung angeordnet ist, deren Unterkante tiefer liegt als die Oberkante des Betätigungsbügels.

23. Einkaufswagen nach einem der Ansprüche 1 bis 22,
**dadurch gekennzeichnet,**
**daß** der Warenbehälter in seiner Stirnwand (21) eine nach oben durch den oberen Randdraht (22) begrenzte Grifföffnung (23) aufweist.
